# FASCICULE DE BREVET EUROPEEN

(11) **EP 2 907 019 B1**
(45) Date de publication et mention de la délivrance du brevet: **20.11.2019**
(21) Numéro de dépôt: 13785558.1
(22) Date de dépôt: 14.10.2013
(51) Int. Cl.: G06F 3/0488, G06F 1/16, G06F 3/042, G06F 3/0354

(54) **APPAREIL PORTABLE A ÉCRAN D'AFFICHAGE ET DISPOSITIF D'INTERFACE UTILISATEUR**
TRAGBARE VORRICHTUNG MIT EINEM BILDSCHIRM UND EINER BENUTZERSCHNITTSTELLENVORRICHTUNG
PORTABLE APPLIANCE COMPRISING A DISPLAY SCREEN AND A USER INTERFACE DEVICE

(30) Priorité: 15.10.2012 FR 1259824
(43) Date de publication de la demande: 19.08.2015
(73) Titulaire: ISORG, 38000 Grenoble (FR); Commissariat à l'Energie Atomique et aux Energies Alternatives, 75015 Paris (FR)
(72) Inventeur: GOMEZ, Jean-Yves, 38000 Grenoble (FR)
(74) Mandataire: Cabinet Beaumont
(86) Numéro de dépôt international: PCT/FR2013/052450
(87) Numéro de publication internationale: WO 2014/060693

(56) Documents cités:
- EP-A1- 2 107 446
- US-A1- 2006 145 365
- US-A1- 2008 121 442
- US-A1- 2009 315 834
- US-A1- 2010 295 797
- US-A1- 2010 295 821

## Description

La présente demande de brevet revendique la priorité de la demande de brevet français FR12/59824 qui sera considérée comme faisant partie intégrante de la présente description.

### Domaine

La présente demande concerne un appareil portable comprenant un écran d'affichage et un dispositif d'interface utilisateur, notamment un téléphone cellulaire, un téléphone sans fil, un téléphone-ordinateur, un lecteur audio, un lecteur vidéo, un mini-ordinateur portable, un lecteur électronique, une tablette électronique, une caméra, une commande à distance, un dispositif d'analyse ou un capteur.

### Exposé de l'art antérieur

Les interfaces utilisateur pour les appareils portables sont devenues de plus en plus sophistiquées, et de nombreuses interfaces utilisateur incluent désormais des écrans d'affichage.

Des exemples de dispositifs d'interface utilisateur d'un appareil portable ayant un écran d'affichage comprennent un clavier, des boutons, des molettes, des interrupteurs, des manettes ou des écrans tactiles.

Les documents US 2009/315834, US 2010/295797, EP 2 107 446 et US 2010/295821 décrivent des appareils portables comprenant un écran d'affichage et un dispositif d'interface utilisateur. Le document US 2008/121442 décrit un panneau tactile. Le document US 2006/145365 décrit un dispositif d'affichage et de saisie de données comprenant des capteurs de photons organiques.

### Résumé

L'invention concerne un appareil portable tel que revendiqué à la revendication 1.

Un mode de réalisation prévoit un appareil portable comprenant un écran d'affichage sur une première face et un dispositif d'interface utilisateur sur une deuxième face différente de la première face, le dispositif comprenant une matrice de capteurs de photons.

Selon un mode de réalisation, le dispositif est adapté à détecter des variations de l'ombre d'un organe d'actionnement et/ou du renvoi d'un rayonnement par l'organe d'actionnement.

Selon un mode de réalisation, le dispositif est adapté à déduire, des variations de l'ombre d'un organe d'actionnement et/ou du renvoi d'un rayonnement par l'organe d'actionnement, une information représentative d'une variation de la position de l'organe d'actionnement par rapport à la matrice de capteurs.

Selon un mode de réalisation, le dispositif est adapté à déduire, des variations d'ombre et/ou des variations du rayonnement renvoyé, une information représentative d'une variation de la position de l'organe d'actionnement parallèlement à la matrice de capteurs.

Selon un mode de réalisation, la première face est opposée à la deuxième face.

Selon un mode de réalisation, le dispositif est adapté à détecter des variations du niveau d'intensité lumineuse reçu par les capteurs.

Selon un mode de réalisation, l'appareil comprend, en outre, un module de commande relié à l'écran d'affichage et au dispositif d'interface utilisateur et adapté à commander une modification de l'affichage sur l'écran d'affichage lorsque le dispositif d'interface utilisateur détecte l'organe d'actionnement dans une plage de positions par rapport à la matrice de capteurs.

Selon un mode de réalisation, une couche translucide de protection recouvre la matrice de capteurs.

Selon un mode de réalisation, la surface de la matrice de capteurs est supérieure à la surface de l'organe d'actionnement en regard de ladite matrice.

Selon un mode de réalisation, les capteurs de photons sont réalisés en des matériaux transparents.

Selon un mode de réalisation, le dispositif comprend, en outre, des émetteurs d'ondes électromagnétiques.

Selon un mode de réalisation, le dispositif comprend, en outre, une matrice d'émetteurs d'un rayonnement visible ou infrarouge.

Selon un mode de réalisation, le dispositif comprend, en outre, un guide d'onde recouvrant la matrice de capteurs de photons et des émetteurs d'un rayonnement visible ou infrarouge à la périphérie du guide d'onde.

Selon un mode de réalisation, les capteurs de photons sont des capteurs organiques réalisés par dépôt de matériaux conducteurs et semiconducteurs organiques sous forme liquide sur un support diélectrique.

Selon un mode de réalisation, l'appareil est un téléphone cellulaire, un téléphone sans fil, un téléphone-ordinateur, un lecteur audio, un lecteur vidéo, un mini-ordinateur portable, un lecteur électronique, une tablette électronique, une caméra, une commande à distance, un dispositif d'analyse ou un capteur.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue schématique de la face avant d'un mode de réalisation d'un appareil portable à écran d'affichage ;
la figure 2 est une vue schématique de la face arrière de l'appareil de la figure 1 ;
la figure 3 est un schéma-bloc illustrant un mode de réalisation du circuit interne de l'appareil portable de la figure 1 ;
la figure 4 est une vue en perspective représentant, de façon schématique, un mode de réalisation du dispositif d'interface utilisateur de l'appareil portable de la figure 1 ;
la figure 5 est une vue en coupe du dispositif d'interface utilisateur de la figure 4 ;
les figures 6, 7 et 8 sont des vues en coupe représentant d'autres modes de réalisation d'un dispositif d'interface utilisateur ;
la figure 9 est un schéma-bloc illustrant un mode de réalisation d'un procédé d'utilisation de l'appareil portable de la figure 1 ;
les figures 10A et 10B sont des vues en coupe représentant, de façon partielle et schématique, un mode de réalisation d'un dispositif d'interface utilisateur à base de matériaux conducteurs et semiconducteurs organiques ; et
la figure 11 est une vue en coupe représentant, de façon partielle et schématique, une variante de réalisation du dispositif des figures 10A et 10B.

Par souci de clarté, de mêmes éléments ont été désignés par de mêmes références aux différentes figures et, de plus, comme cela est habituel dans la représentation des circuits, les diverses figures ne sont pas tracées à l'échelle.

### Description détaillée

Seuls les éléments utiles à la compréhension des modes de réalisation ont été représentés et sont décrits. En particulier, l'utilisation faite des appareils portables à écran d'affichage et à dispositif interface utilisateur décrits ci-après n'a pas été détaillée. De plus, les moyens de traitement des informations fournies par les dispositifs d'interface utilisateur décrits ci-après sont à la portée de l'homme de l'art et ne sont pas décrits en détail.

De nombreuses interfaces utilisateur utilisent des écrans tactiles capables de détecter le toucher par un doigt ou un stylet. Il existe de nombreux types d'écrans tactiles, notamment ceux qui utilisent des capteurs capacitifs ou des capteurs résistifs.

Les écrans tactiles sont pratiques dans les appareils portables en raison de la simplicité de leur utilisation par un utilisateur. Des éléments de menu peuvent être affichés sur l'écran et l'utilisateur peut interagir directement avec les éléments de menu en touchant ou en tapant sur eux, sans devoir positionner ou manipuler un indicateur à l'écran comme un pointeur, une flèche, ou un curseur. En outre, la fonction tactile de l'écran d'affichage permet de réduire le nombre de périphériques d'entrée supplémentaires tels que des boutons, des molettes, des interrupteurs, des manettes, etc.

Toutefois, un inconvénient de ce type d'interface est que l'écran tactile tend à se salir rapidement au contact des doigts de l'utilisateur. Ceci implique qu'un nettoyage régulier de l'écran doit être réalisé, en particulier en cas d'utilisation dans des environnements salissants (usines, transports en communs, etc.).

Un autre inconvénient des écrans tactiles est que les doigts de l'utilisateur peuvent souvent gêner la vue de l'écran par l'utilisateur. En outre, il peut être difficile pour un utilisateur à la fois de tenir l'appareil portable et de réaliser une saisie tactile précise sur l'écran, surtout avec une seule main. Pour cette raison, de nombreux appareils sont plus difficiles à utiliser qu'il ne serait souhaitable.

Ainsi, un objet d'un mode de réalisation est de prévoir un appareil portable à écran d'affichage palliant au moins en partie certains des inconvénients des appareils existants.

Un autre objet d'un mode de réalisation est de faciliter l'utilisation de l'appareil portable.

Un autre objet d'un mode de réalisation est de réduire l'altération de la propreté de l'écran d'affichage de l'appareil portable.

Un autre objet d'un mode de réalisation est que la vue de l'écran d'affichage n'est pas gênée pendant l'utilisation de l'appareil.

Un autre objet d'un mode de réalisation est de réduire le nombre de périphériques d'entrée manuels, tels que des boutons, des molettes, des interrupteurs ou des manettes de jeu.

Un autre objet d'un mode de réalisation est que l'appareil portable à écran d'affichage est plus facile à réaliser que les dispositifs connus.

Selon un mode de réalisation, l'appareil portable comprend une première face sur laquelle est situé un écran d'affichage et une deuxième face, par exemple opposée à la première face, sur laquelle est prévue un dispositif d'interface utilisateur avec ou sans contact. On entend par "dispositif d'interface utilisateur" un dispositif d'interface au moyen duquel l'utilisateur peut agir sur l'appareil.

Un mode de réalisation va être décrit dans lequel l'appareil portable est un téléphone cellulaire. Toutefois, il est clair que ce mode de réalisation peut s'appliquer à tout type d'appareil portable à écran d'affichage.

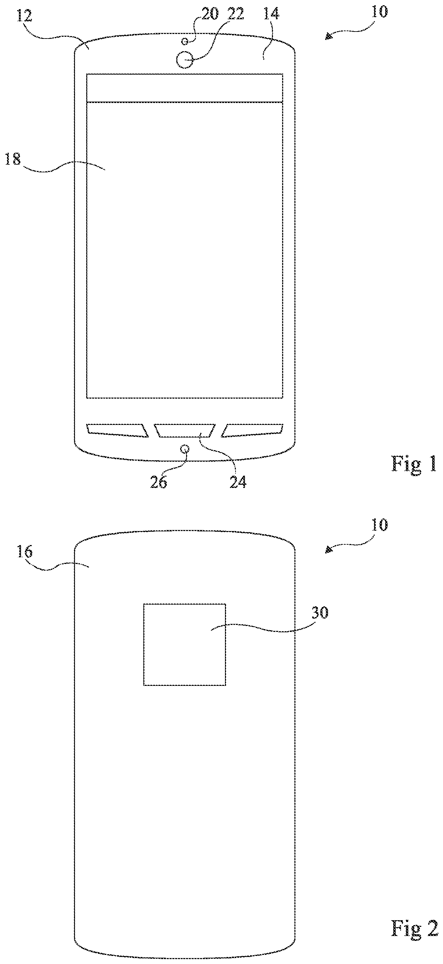

Les figures 1 et 2 représentent des vues des faces avant et arrière d'un mode de réalisation d'un téléphone cellulaire 10. Le téléphone cellulaire 10 comprend un boîtier 12 mince et sensiblement rectangulaire qui comprend deux faces opposées, une face avant 14 et une face arrière 16, par exemple sensiblement planes et parallèles. Un écran d'affichage 18 est prévu sur la face 14. Un haut-parleur 20, permettant notamment l'émission de la voix d'un interlocuteur reçue par le téléphone cellulaire 10 pendant un appel téléphonique, et une caméra 22 sont prévus en face avant 12, en partie supérieure de l'écran d'affichage 18. Des touches de clavier 24 et un microphone 26, permettant notamment de recevoir la voix de l'utilisateur pendant un appel téléphonique, sont, en outre, prévus en face avant 12 et partie inférieure de l'écran d'affichage 18.

Un dispositif d'interface utilisateur 30 est prévu en face arrière 16 du téléphone cellulaire 10. La surface exposée du dispositif d'interface utilisateur 30 peut avoir une forme carrée, rectangulaire ou toute autre forme. La surface exposée du dispositif d'interface utilisateur 30 peut être aussi grande que la surface de l'écran d'affichage 18 ou peut être strictement inférieure à la surface de l'écran d'affichage 18. A titre d'exemple, la surface exposée peut avoir une superficie comprise entre 1 cm² et 10 cm². Elle peut avoir une forme rectangulaire ou carrée, par exemple de 1 cm par 1 cm, de 2 cm par 2 cm, de 1,5 cm par 2,5 cm ou de 2 cm par 2,5 cm. La surface exposée du dispositif 30 peut être proportionnelle à la surface de l'écran d'affichage 18. A titre d'exemple, pour un écran d'affichage 18 de 11 cm par 6 cm, la surface exposée du dispositif 30 peut avoir une forme rectangulaire de 3,7 cm par 2 cm.

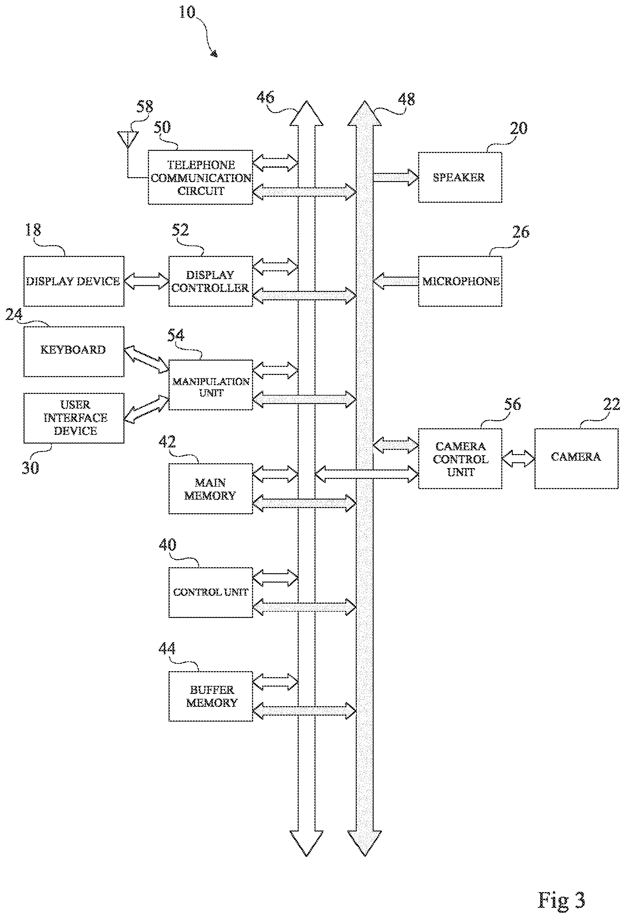

La figure 3 est un schéma-bloc illustrant un mode de réalisation du circuit interne du téléphone cellulaire 10 des figures 1 et 2.

Le téléphone cellulaire 10 comprend un module de commande principal 40 (Control Unit), une mémoire principale 42 (Main Memory), par exemple une mémoire non transitoire, et une mémoire tampon 44 (Buffer Memory), par exemple une mémoire non transitoire, qui sont connectés à un bus système, comprenant un bus de commande 46 et un bus de données 48. En outre, un circuit de communication 50 (Telephone Communication Circuit), un module de commande d'affichage 52 (Display Controller), un module de gestion d'interface utilisateur 54 (Manipulation Unit) et un module de commande de caméra 56 (Caméra Control Unit) sont reliés au bus système.

Le module de commande principal 40 comprend un processeur comportant une mémoire non volatile qui stocke des instructions d'un programme d'ordinateur pour commander le fonctionnement du téléphone cellulaire 10. Le module de commande principal 40 peut exécuter plusieurs procédés de commande qui se basent sur les instructions du programme d'ordinateur mémorisé.

La mémoire principale 42 stocke, par exemple, des données telles que des données d'annuaire téléphonique ou des adresses de messagerie. En outre, la mémoire principale 42 peut stocker des images ou des vidéos acquises en utilisant la caméra 22. La mémoire tampon 44 est utilisée comme mémoire de travail lorsque le module de commande principal 40 exécute les procédés basés sur les instructions du programme d'ordinateur.

Le circuit de communication téléphonique 50 est un module de communication radio pour l'établissement d'une communication téléphonique ou d'un autre type de communication à distance (par exemple pour l'échange de données via Internet) par l'intermédiaire d'une station de base et d'un réseau de téléphonie mobile. Il reçoit/transmet des données de communication par l'intermédiaire d'une antenne 58.

Le haut-parleur 20 (Speaker) et le microphone 26 (Microphone) sont connectés au bus de données 48. Le haut-parleur 20 fonctionne comme un émetteur de messages sonores et le microphone 26 fonctionne comme un récepteur de messages sonores. Lors d'une communication téléphonique entre l'utilisateur du téléphone cellulaire 10 et un interlocuteur, un message vocal de l'interlocuteur reçu par le circuit de communication téléphonique 50 est émis par le haut-parleur 20 sous la commande du module de commande principal 40, et la voix de l'utilisateur reçue par le microphone 26 est transmise à l'interlocuteur par l'intermédiaire du circuit de communication téléphonique 50. Dans le présent mode de réalisation, le circuit de communication téléphonique 50 peut, en outre, transmettre et/ou recevoir des données représentatives des images numériques acquises par la caméra 22 dans le cas de la visiophonie.

L'écran d'affichage 18 (Display Device) est relié au module de commande d'affichage 52. Sous la requête du module de commande principal 40, le module 52 peut commander l'écran d'affichage 18 pour afficher des images et/ou des vidéos, par exemple l'image de l'interlocuteur avec lequel l'utilisateur du téléphone cellulaire 10 est en communication téléphonique dans le cas de la visiophonie.

Le module de gestion d'interface 54 est relié aux touches du clavier 24 (Keyboard) et au dispositif d'interface utilisateur 30 (User Interface Device). Le module de commande principal 40 est configuré pour détecter, à partir des signaux fournis par le module de gestion d'interface 54, le type de touche qui est enfoncé ou l'interaction de l'utilisateur avec le dispositif d'interface utilisateur 30 et pour exécuter l'opération correspondante.

La caméra 22 (Camera) est reliée au module de commande de caméra 56. Lorsque la fonction d'acquisition de photos ou de vidéos ou la fonction de visiophonie est activée par l'intermédiaire du dispositif d'interface utilisateur 30 et du module de gestion d'interface 54, les images numériques acquises par la caméra 22 sont reçues par le bus de données 48 par l'intermédiaire du module de commande de caméra 56.

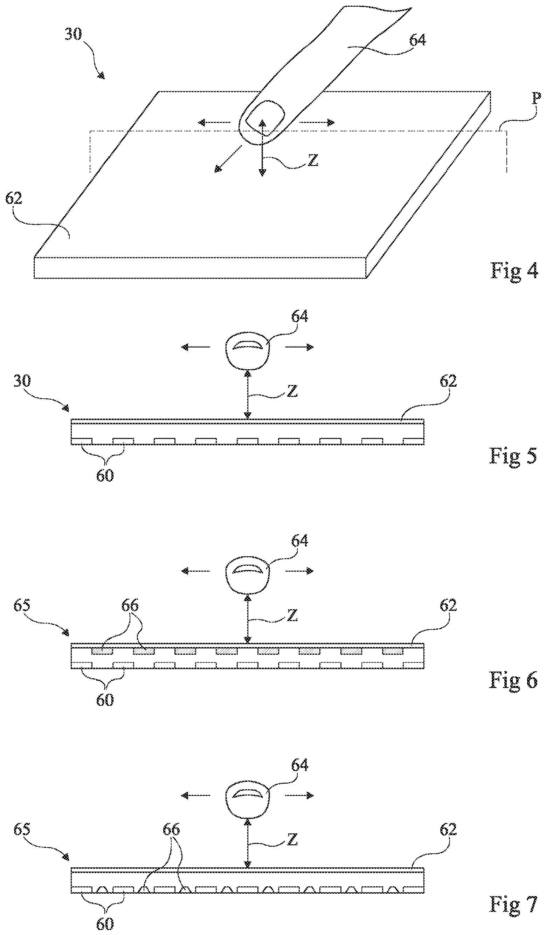

Les figures 4 et 5 représentent, de façon schématique, un mode de réalisation du dispositif 30 d'interface utilisateur. La figure 4 est une vue en perspective du dispositif 30 et la figure 5 est une vue en coupe selon le plan P de la figure 4.

Le dispositif 30 comprend une matrice de capteurs de photons, ou photodétecteurs 60 (figure 5). Dans cet exemple, les capteurs 60 sont disposés sur une surface plane. Des modes de réalisation pourront toutefois être prévus dans lesquels les capteurs 60 sont disposés sur une surface non plane. La matrice de capteurs 60 peut être surmontée d'un revêtement de protection transparent ou translucide 62, par exemple une plaque de verre ou un revêtement en plastique, par exemple en polyméthacrylate de méthyle ou PMMA (sigle anglais pour Polymethyl Methacrylate).

Le dispositif 30 comprend une matrice de capteurs de photons, ou photodétecteurs 60. La matrice peut comprendre entre environ 20000 et environ 250000 photodétecteurs 60. Les photodétecteurs 60 peuvent être répartis en rangées et en colonnes. La matrice est, par exemple, une matrice carrée ou rectangulaire. A titre d'exemple, une matrice de 50000 photodétecteurs peut correspondre à une matrice de 200 rangées et de 250 colonnes ou à une matrice de 225 rangées et de 225 colonnes. A titre d'exemple, une matrice de 250000 photodétecteurs peut correspondre à une matrice de 500 rangées et de 500 colonnes ou à une matrice de 400 rangées et de 600 colonnes. Pour permettre la reconnaissance d'une empreinte digitale, la résolution de la matrice de photodétecteurs 60 est de préférence comprise entre environ 200 ppp et environ 600 ppp, de préférence entre environ 400 ppp et environ 600 ppp.

L'organe d'actionnement 64 peut être un doigt de l'utilisateur, sa main, ou tout autre objet. En particulier, dans le présent mode de réalisation dans lequel l'appareil portable 10 est un téléphone cellulaire, l'organe d'actionnement 64 est, de préférence, un doigt de l'utilisateur, par exemple l'index ou le majeur de la main de l'utilisateur qui tient le téléphone cellulaire 10.

La figure 6 est une vue en coupe d'un mode de réalisation du dispositif d'interface utilisateur 65 dans lequel le dispositif 65 comprend les mêmes éléments que le dispositif 30 des figures 4 et 5, et comprend, en outre, une matrice d'émetteurs 66 d'un rayonnement, par exemple visible ou infrarouge. Les émetteurs 66 sont, par exemple, des diodes électroluminescentes. Dans cet exemple, les émetteurs 66 sont disposés dans un plan parallèle à la matrice de photodétecteurs 60, et entre la matrice de photodétecteurs et le revêtement de protection 62.

La matrice de photodétecteurs 60 et la matrice des émetteurs 66 sont superposées avec un léger décalage de façon que, en vue de dessus, les émetteurs 66 ne soient pas en regard des capteurs 60, ce qui masquerait les capteurs 60 et empêcherait la détection de l'image de l'organe d'actionnement 64. En outre, des parois opaques, non représentées, peuvent être prévues, du côté de chaque émetteur 66 en regard des capteurs 60 pour éviter que les capteurs 60 reçoivent directement le rayonnement émis par les émetteurs 66. Dans un autre mode de réalisation, la matrice de capteurs de photons 60 est placée entre la matrice d'émetteurs 66 et le revêtement de protection 62.

La figure 7 est une vue en coupe représentant un autre mode de réalisation du dispositif 65 dans lequel la matrice de capteurs 60 et la matrice d'émetteurs 66 sont réalisées dans un même niveau de l'empilement de couches conductrices et semiconductrices. Les émetteurs 66 peuvent être alternés avec les capteurs 60.

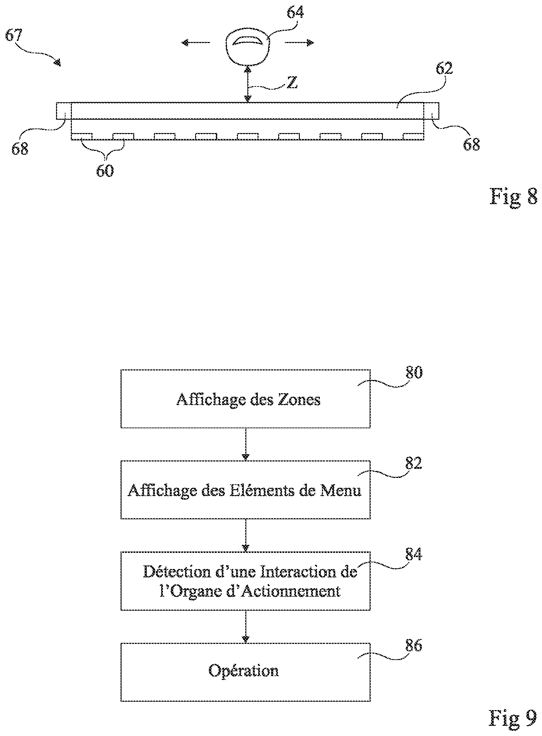

La figure 8 est une vue en coupe représentant un autre mode de réalisation dans lequel le dispositif d'interface utilisateur 67 comprend des émetteurs d'un rayonnement. Les émetteurs peuvent comprendre des diodes électroluminescentes 68 disposées à la périphérie d'un guide d'onde qui peut correspondre au revêtement de protection 62. Le revêtement de protection 62 guide alors le rayonnement émis par les diodes électroluminescentes 68 pour éclairer l'organe d'actionnement 64. Selon un autre mode de réalisation, la matrice de photodétecteurs 60 est disposée entre le guide d'onde et le revêtement de protection 62.

Le dispositif 30, 65, 67 est adapté à détecter la position d'un organe d'actionnement 64 par rapport à la matrice de capteurs 60. L'organe d'actionnement 64 peut être placé directement en regard de la matrice de capteurs 60, c'est-à-dire qu'aucun système optique n'est prévu entre la matrice et l'organe d'actionnement. La surface occupée par la matrice de capteurs 60 est de préférence supérieure à la surface de la projection de l'organe d'actionnement 64 dans le plan de cette matrice. Plus généralement (en particulier si la matrice de capteurs 60 n'occupe pas une surface plane), la surface de la matrice de capteurs 60 est supérieure à la surface de l'organe d'actionnement 64 en regard de cette matrice. En particulier, le dispositif 30, 65, 67 peut être adapté à détecter des déplacements de l'organe d'actionnement dans un plan parallèle au plan de la matrice de capteurs 60, et des variations de la distance Z entre l'organe d'actionnement 64 et la matrice de capteurs 60.

Selon un mode de réalisation, pouvant être mis en oeuvre avec le dispositif 30 représenté aux figures 4 et 5, le dispositif 30 est adapté à détecter des variations de l'ombre portée de l'organe d'actionnement 64 sur la matrice de capteurs 60, lorsque l'organe d'actionnement 64 est disposé entre une source lumineuse et la matrice et à en déduire une information représentative d'une variation de position de l'organe d'actionnement. La source de lumière est de préférence la lumière ambiante, par exemple le soleil ou l'éclairage électrique intérieur d'une pièce d'un bâtiment.

Selon un autre mode de réalisation, pouvant être mis en oeuvre avec le dispositif 30 représenté aux figures 6 à 8, le dispositif d'interface utilisateur comprend, en outre, une source d'un rayonnement susceptible d'être renvoyé, au moins en partie, par l'organe d'actionnement. Le dispositif d'interface utilisateur est adapté à détecter le rayonnement renvoyé sur la matrice de photodétecteurs et à en déduire une information représentative d'une variation de position de l'organe d'actionnement. Il s'agit, par exemple, d'un rayonnement visible ou infrarouge. Dans ce cas, on utilise de préférence la réflexion/diffusion du rayonnement visible ou infrarouge sur l'organe d'actionnement, vue par les capteurs de photons, pour obtenir une information relative à la position de l'organe d'actionnement.

Pour cela, lors d'une phase d'initialisation, le dispositif 30, 65, 67 mesure la luminosité ambiante, c'est-à-dire l'intensité lumineuse reçue par chaque capteur 60 lorsqu'aucun organe d'actionnement n'est disposé en regard de la matrice de capteurs 60.

Dans le cas de la détection d'ombrage, lorsque l'organe d'actionnement 64 est placé entre la source lumineuse et la matrice de capteurs, l'ombre portée de l'organe d'actionnement sur la matrice de capteurs entraîne une diminution de l'intensité lumineuse reçue par certains des capteurs 60. Dans le cas de la détection du rayonnement renvoyé par l'organe d'actionnement 64, le rayonnement renvoyé peut entraîner une augmentation de l'intensité lumineuse reçue par certains des capteurs 60. Ceci permet au dispositif 30, 65, 67 de détecter la présence de l'organe d'actionnement 64 à proximité de la matrice et, le cas échéant, de suivre les déplacements de l'organe d'actionnement dans un plan parallèle au plan de la matrice (ou parallèlement à la surface occupée par la matrice si cette surface n'est pas plane).

Lorsque la distance Z entre l'organe d'actionnement et la matrice de capteurs 60 varie, le niveau d'intensité lumineuse reçu par les capteurs 60 varie également. En particulier, dans le cas de la détection d'ombrage, lorsque l'organe d'actionnement 64 est approché de la matrice de capteurs 60, l'intensité lumineuse reçue par les capteurs 60 à l'ombre de l'organe d'actionnement diminue, et lorsque l'organe d'actionnement 64 est éloigné de la matrice de capteurs, l'intensité lumineuse augmente. Dans le cas de la détection du rayonnement renvoyé par l'organe d'actionnement 64, lorsque l'organe d'actionnement 64 est approché de la matrice de capteurs 60, l'intensité lumineuse reçue par les capteurs 60 à l'ombre de l'organe d'actionnement augmente, et lorsque l'organe d'actionnement 64 est éloigné de la matrice de capteurs, l'intensité lumineuse diminue.

Le dispositif 30, 65, 67 est adapté à déduire, des variations d'intensité de l'ombre portée de l'organe d'actionnement 64 ou du rayonnement renvoyé par l'organe d'actionnement 64, une information relative aux variations de la distance Z entre l'organe d'actionnement et la matrice de capteurs 60. Dans une variante de réalisation, on peut prévoir une phase d'étalonnage permettant de réaliser une correspondance entre le niveau d'intensité de l'ombre portée de l'organe d'actionnement ou du rayonnement renvoyé par l'organe d'actionnement et la distance entre l'organe d'actionnement 64 et les capteurs 60. Ceci permet au dispositif 30, 65, 67 de mesurer la distance Z entre l'organe d'actionnement 64 et les capteurs 60.

Ainsi, dans un mode de réalisation, le dispositif est adapté à détecter la position en trois dimensions de l'organe d'actionnement 64 dans l'espace situé en regard de la matrice de capteurs.

Un avantage du dispositif d'interface 30, 65, 67 décrit en relation avec les figures 4 à 8 est qu'il est susceptible d'être actionné sans contact avec l'utilisateur. On note toutefois que le dispositif 30, 65, 67 peut également fonctionner à la manière d'une surface tactile, c'est-à-dire que si l'utilisateur fait glisser son doigt sur la face supérieure du dispositif (face supérieure du revêtement de protection 62 dans cet exemple), le dispositif sera en mesure de déterminer la position en deux dimensions de l'organe d'actionnement sur la surface de glissement (distance Z égale à l'épaisseur du revêtement de protection 62).

Selon un autre mode de réalisation, le dispositif 30, 65, 67 est configuré pour ne détecter des déplacements de l'organe d'actionnement 64 seulement lorsque l'organe d'actionnement 64 est au contact de la matrice de capteurs 60 ou est très proche de la matrice de capteurs 60.

Un autre avantage du dispositif d'interface 30, 65, 67 est qu'il permet de fournir une information relative à la distance entre l'organe d'actionnement et les capteurs 60. Ceci permet par exemple de mettre en oeuvre des applications de contrôle d'objets virtuels en trois dimensions, ou de navigation en trois dimensions.

Dans le mode de réalisation décrit précédemment dans lequel le dispositif 30 ne comprend pas de sources lumineuses, on utilise l'ombre de l'organe d'actionnement, portée sur la surface de détection, pour obtenir une information relative à la position de l'organe d'actionnement. Selon un autre mode de réalisation, on peut utiliser l'image de l'organe d'actionnement 64, vue par les capteurs de photons 60. On note qu'en pratique, l'ombre portée et l'image de l'organe d'actionnement ne coïncident pas, sauf si la source de lumière est placée exactement dans l'axe de projection de l'organe d'actionnement sur la matrice de capteurs. En variante, le dispositif 30 peut détecter à la fois l'ombre portée et l'image de l'organe d'actionnement pour obtenir une information plus précise relative à la position ou aux variations de la position de l'organe d'actionnement. Le module de gestion d'interface 54 ou le module de commande principal 40 comprend par exemple un logiciel de traitement des signaux fournis par la matrice de photodétecteurs 60, adapté à détecter l'ombre portée et éventuellement l'image de l'organe d'actionnement 64.

Dans les modes de réalisation représentés aux figures 6 à 8, chacun des émetteurs 66, 68 émet en fonctionnement un rayonnement en permanence. Lorsque l'organe d'actionnement 64 survole le revêtement de protection 62, une partie du rayonnement émis est réfléchi/diffusé par l'organe d'actionnement 64 vers des photodétecteurs 60 voisins. Le module de gestion d'interface 54 ou le module de commande principal 40 peut en déduire une information relative à la présence d'un objet au-dessus de l'interface. Ainsi, les émetteurs 66, 68, en combinaison avec les photodétecteurs 60, permettent au dispositif 65, 67 de mettre en oeuvre les mêmes fonctions de détection des variations de position de l'organe d'actionnement 64 que les photodétecteurs 60 seuls utilisés comme détecteurs d'ombrage.

Un avantage de la détection de la réflexion/diffusion du rayonnement par l'organe d'actionnement 64 par rapport à la détection de l'ombre de l'organe d'actionnement 64 est que son fonctionnement est indépendant de l'éclairage ambiant et donc plus robuste. En particulier, la détection de la réflexion d'un rayonnement par l'organe d'actionnement peut fonctionner dans l'obscurité, en l'absence d'une source de lumière extérieure au téléphone cellulaire 10. On peut prévoir d'alterner entre un mode de fonctionnement basse consommation, basé sur la détection de l'ombre portée de l'organe d'actionnement par les photodétecteurs 60 lorsque l'éclairage ambiant le permet, et un mode de fonctionnement par détection de la réflexion/diffusion d'un rayonnement par l'organe d'actionnement 64 lorsque les conditions d'éclairement ne permettent pas la détection d'ombre portée. Le téléphone cellulaire 10 peut comprendre un capteur de pénombre pour passer automatiquement du mode basse consommation au mode de détection par réflexion lorsque la luminosité ambiante devient trop faible pour permettre la détection d'ombre portée.

Lorsque les émetteurs 66, 68 sont des émetteurs infrarouges, on peut prévoir une émission infrarouge avec modulation de fréquence, ce qui permet, à la réception par les photodétecteurs 60, de discriminer l'ombrage de la réflexion des signaux infrarouges. Ceci permet d'utiliser simultanément le fonctionnement par infrarouge et le fonctionnement par détection d'ombre portée de façon à obtenir une information plus précise relative à la position de l'organe d'actionnement 64. L'émission infrarouge avec modulation de fréquence permet en outre de réduire la consommation de la source infrarouge.

La figure 9 illustre un mode de réalisation d'un procédé d'utilisation du téléphone cellulaire 10 représenté aux figures 1 et 2.

A l'étape 80, une image est affichée sur l'écran 18 du téléphone cellulaire 10. L'image peut comprendre des zones d'affichage visuellement délimitées. A titre d'exemple, l'image peut comprendre une première zone d'affichage ayant la même forme que le dispositif d'interface utilisateur 30 à la même échelle ou à une échelle agrandie. Des deuxièmes zones d'affichage peuvent être affichées dans la première zone. Chaque zone d'affichage correspond à une plage de positions de l'organe d'actionnement 64 par rapport au dispositif d'interface utilisateur 30. Le procédé se poursuit à l'étape 82.

A l'étape 82, des éléments de menu sont affichés dans les zones d'affichage. Le procédé se poursuit à l'étape 84.

A l'étape 84, le module de commande principal 40 détermine si un élément de menu est sélectionné ou activé par l'utilisateur. L'élément de menu situé dans l'une des zones d'affichage peut être sélectionné ou activé par une interaction particulière entre l'organe d'actionnement 34 et le dispositif d'interface utilisateur 30. Le procédé se poursuit à l'étape 86. Des exemples d'interaction qui peuvent entraîner la sélection d'un élément de menu affiché dans une zone d'affichage à laquelle correspond une plage de positions de l'organe d'actionnement par rapport au dispositif d'interface utilisateur sont les suivants :
- une détection, quelle que soit sa durée, de l'organe d'actionnement 34 dans cette plage de positions ;
- une détection ininterrompue pendant une durée donnée de l'organe d'actionnement 34 dans cette plage de positions ;
- deux, ou plus, détections de l'organe d'actionnement 34 pendant une durée donnée dans cette plage de positions, séparées par une absence de détection de l'organe d'actionnement 34 par le dispositif d'interface 30 ;
- un déplacement dans une direction particulière, par exemple de la gauche vers la droite ou du haut vers le bas, de l'organe d'actionnement 34 dans cette plage de positions ; et
- l'arrêt de la détection de l'organe d'actionnement après une détection continue de l'organe d'actionnement par le dispositif d'interface 30, l'arrêt de la détection ayant lieu dans cette plage de positions.

A l'étape 86, le module de commande principal 40 réalise l'opération associée à la sélection de l'élément de menu par l'utilisateur. L'opération peut correspondre à l'établissement d'une communication téléphonique avec un interlocuteur, l'acquisition de données via Internet, etc. L'opération peut correspondre à une modification des éléments de menu affichés dans les zones d'affichage et le procédé se poursuit alors à l'étape 82.

Selon un mode de réalisation, l'écran 18 peut, en outre, être un écran tactile. Dans ce cas, une interaction de l'utilisateur avec le téléphone cellulaire 10 peut être effectuée en touchant l'écran d'affichage 18 à l'emplacement de l'élément de menu désiré, de façon alternative à une interaction avec le dispositif d'interface 30 sur la face arrière du téléphone cellulaire 10.

Selon un mode de réalisation, les photodétecteurs 60 du dispositif d'interface utilisateur 30, 65, 67 peuvent être réalisés à base de matériaux conducteurs et semiconducteurs organiques.

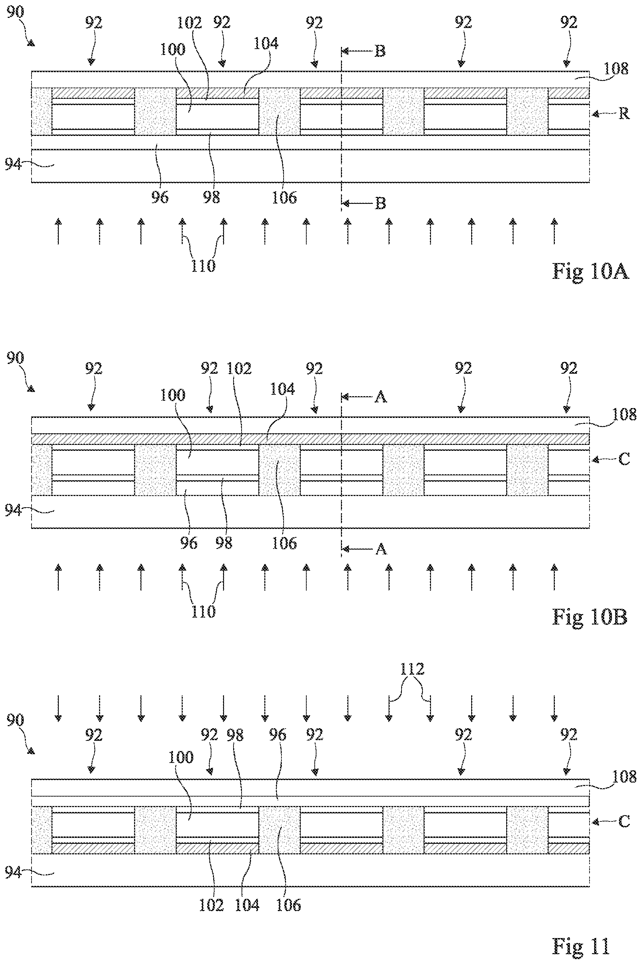

Les figures 10A et 10B sont des vues en coupe représentant de façon schématique et partielle un mode de réalisation d'un dispositif 90 d'interface utilisateur à base de matériaux conducteurs et semiconducteurs organiques. La figure 10B est une vue en coupe dans le plan B de la figure 10A, et la figure 10A est une vue en coupe dans le plan A de la figure 10B.

Le dispositif 90 comprend une matrice de capteurs de photons, ou photodétecteurs 92, adaptée à détecter des variations de l'ombre portée d'un organe d'actionnement (non visible sur les figures 10A et 10B) ou adaptée à détecter la réflexion d'ondes lumineuses par l'organe d'actionnement. Dans cet exemple, les photodétecteurs 92 sont formés sur une face d'un support ou substrat diélectrique transparent ou translucide 94, par exemple en verre ou en plastique.

Chaque photodétecteur 92 comprend un empilement comportant, dans l'ordre à partir du substrat 94 :
une électrode transparente 96 en un matériau TCO ;
une portion 98 injectrice d'électrons, par exemple en un polymère semiconducteur organique transparent très dopé ou en un oxyde métallique transparent et conducteur, par exemple de type ZnO ;
une portion 100 en un mélange de polymères semiconducteurs organiques, par exemple le poly(3-hexylthiophène) ou poly(3-hexylthiophène-2,5-diyl) (semiconducteur de type P), connu sous la dénomination P3HT, mélangé avec le [6,6]-phényl-C₆₁-butanoate de méthyle (semiconducteur de type N), connu sous la dénomination PCBM ;
une portion 102 en un polymère semiconducteur organique très dopé (couche injectrice de trous), par exemple un polymère connu sous la dénomination PEDOT:PSS, qui est un mélange de poly(3,4)-éthylènedioxythiophène et de polystyrène sulfonate de sodium ;
une électrode 104, par exemple en or ou en argent.

Un revêtement de protection 108 recouvre la face supérieure de la matrice (côté électrode 104).

Les électrodes inférieures 96 ont, en vue de dessus, la forme de bandes parallèles, chaque bande 96 adressant tous les photodétecteurs d'une même ligne R (figure 10A) de la matrice. Les électrodes supérieures 104 ont, vu de dessus, la forme de bandes orthogonales aux électrodes 96, chaque bande 104 adressant tous les photodétecteurs d'une même colonne C (figure 10B) de la matrice. Dans cet exemple, la couche d'électrode inférieure 96 s'étend de façon continue sous chaque rangée R de photodétecteurs 92 de la matrice, et la couche d'électrode supérieure 104 s'étend de façon continue sur chaque colonne C de photodétecteurs 92 de la matrice. Latéralement, les régions semiconductrices 100 des photodétecteurs 92 sont séparées les unes des autres par un matériau diélectrique 106. En outre, un revêtement de protection transparent 108 recouvre la face supérieure de la matrice (côté électrodes 104).

Dans cet exemple, les photodétecteurs 92 sont destinés à être éclairés à travers le substrat transparent 94 (et à travers les couches transparentes 96 et 98). Sur les figures 10A et 10B, le rayonnement incident est représenté par des flèches 110, côté substrat 94.

La figure 11 est une vue en coupe représentant de façon schématique et partielle une variante de réalisation du dispositif 90 des figures 10A et 10B. Le dispositif de la figure 11 diffère du dispositif des figures 10A et 10B en ce que l'ordre des couches des photodétecteurs 92 est inversé. La figure 11 est une vue en coupe selon une colonne C de photodétecteurs. La coupe correspondante (selon une rangée) n'a pas été représentée.

Dans cet exemple, chaque photodétecteur 92 comprend un empilement comportant, dans l'ordre à partir du substrat 94, une électrode 104, par exemple en aluminium ou en argent, une couche 102 en un polymère semiconducteur organique très dopé (couche donneuse de trous), une couche 100 en un polymère semiconducteur organique, une couche 98 en un polymère semiconducteur organique transparent très dopé (couche donneuse d'électrons), et une électrode transparente 96. Un revêtement de protection transparent 108 recouvre la face supérieure de la matrice (côté électrodes 96).

Les photodétecteurs 92 sont ici destinés à être éclairés à travers le revêtement de protection 108 (et à travers les couches transparentes 96 et 98). Sur la figure 11, le rayonnement incident est représenté par des flèches 112, côté revêtement transparent 108.

On propose ici de réaliser le dispositif 90 par des techniques d'impression. Les matériaux des couches 96 à 108 susmentionnées sont déposés sous forme liquide, par exemple sous forme d'encres conductrices et semiconductrices à l'aide d'imprimantes à jet d'encre. On note que par matériaux sous forme liquide, on entend ici également des matériaux en gel déposables par des techniques d'impression. Des étapes de recuit sont éventuellement prévues entre les dépôts des différentes couches, mais les températures de recuit peuvent ne pas dépasser 150°C, et le dépôt et les éventuels recuits peuvent être réalisés à la pression atmosphérique.

La réalisation de composants semiconducteurs organiques par des techniques d'impression est par exemple décrite dans l'article "CEA-LITEN S2S printing platform for Organic CMOS and Sensors Devices" de Jean-Yves Laurent et al, conférence LOPE-C, juin 2011, Francfort.

Un avantage du dispositif 90 est qu'il peut être réalisé plus facilement que les dispositifs existants. En particulier, il peut être réalisé sur des surfaces plus variées, et notamment sur des plus grandes surfaces et sur tout type de substrat, y compris sur des substrats ne résistant pas à la chaleur, par exemple sur des substrats souples en plastique, papier, carton, tissu, etc. On note que dans le dispositif des figures 10A et 10B, si le substrat est opaque, on peut prévoir de réaliser l'électrode supérieure 104 en un matériau conducteur transparent, et d'éclairer le dispositif par la face supérieure (dans l'orientation de la figure).

Par ailleurs, le dispositif 90 peut être réalisé en utilisant des équipements (équipements de dépôt par impression) compatibles avec les équipements industriels de réalisation d'emballages, de plasturgie, etc.

Un autre avantage du dispositif 90 est que son prix de revient est relativement bas, car les équipements nécessaires à sa réalisation (équipements de dépôt par impression) sont moins coûteux que les équipements nécessaires à la réalisation de dispositifs semiconducteurs inorganiques, et moins coûteux également que les équipements usuels utilisés pour réaliser des composants semiconducteurs organiques (équipements de dépôt par évaporation à basse pression et de recuit à haute température).

Diverses variantes et modifications apparaîtront à l'homme du métier. En particulier, l'homme du métier saura prévoir tout empilement de couches adapté, autre que ceux décrits en relation avec les figures 10A, 10B et 11, pour réaliser un photodétecteur. Il pourra notamment utiliser d'autres matériaux conducteurs, semiconducteurs, et diélectriques déposables sous forme liquide, que ceux mentionnés ci-dessus.

Plus généralement, on propose de réaliser des dispositifs d'interface utilisateur tactiles ou sans contact, dans lesquels des composants semiconducteurs sont réalisés par dépôt de matériaux conducteurs et semiconducteurs organiques liquides sur un support diélectrique. Outre la matrice de photodétecteurs, on pourra également prévoir de réaliser, par impression de matériaux organiques, des émetteurs d'un rayonnement visible ou infrarouge.

Par ailleurs, bien que cela n'ait pas été mentionné ci-dessus, on peut prévoir que, dans la matrice de photodétecteurs, un ou plusieurs transistors d'accès soient associés à chaque photodétecteur (matrice active). Les transistors peuvent également être réalisés à partir de matériaux semiconducteurs organiques sous forme liquide ou en gel, par des techniques d'impression.

En outre, bien que les modes de réalisation décrits précédemment concernent un appareil portable comprenant une première face sur laquelle est situé un écran d'affichage et une deuxième face opposée à la première face sur laquelle est situé un dispositif d'interface utilisateur, il est clair que les première et deuxième faces, bien que différentes, ne sont pas nécessairement opposées. Ainsi, selon un mode de réalisation, la deuxième face peut être perpendiculaire à la première face.

## Revendications

1. Appareil portable (10) comprenant :
un boîtier (12) comprenant une première face (14) et une deuxième face (16) différente de la première face et opposée à la première face ;
un écran d'affichage (18) sur la première face (14) ;
un dispositif d'interface utilisateur (30 ; 65 ; 67) sur la deuxième face (16), le dispositif comprenant une matrice de capteurs de photons (60) disposés en rangées et en colonnes,
un module de commande (40) relié à l'écran d'affichage (18) et au dispositif d'interface utilisateur (30 ; 65 ; 67) et adapté à commander une modification de l'affichage sur l'écran d'affichage lorsque le dispositif d'interface utilisateur détecte l'organe d'actionnement (64) dans une plage de positions par rapport à la matrice de capteurs (60),
**caractérisé en ce que** le dispositif interface utilisateur (30 ; 65 ; 67) comprend, en outre, une matrice d'émetteurs d'un rayonnement visible ou infrarouge,
**en ce qu'**il comprend, en outre, un capteur de pénombre, le dispositif d'interface utilisateur étant adapté à déduire une information représentative d'une variation de la distance entre l'organe d'actionnement et la matrice de capteurs (60), dans un premier mode, à partir des variations de l'ombre de l'organe d'actionnement (64), et, dans un second mode, à partir du renvoi d'un rayonnement par l'organe d'actionnement, le dispositif d'interface utilisateur alternant automatiquement entre le premier mode et le deuxième mode à partir d'une luminosité ambiante détectée par le capteur de pénombre, et
**en ce que** les capteurs de photons (60) sont des capteurs organiques réalisés par dépôt de matériaux conducteurs et semiconducteurs organiques sous forme liquide sur un support diélectrique.

2. Appareil selon la revendication 1, dans lequel le dispositif (30 ; 65 ; 67) est adapté à déduire, des variations de l'ombre de l'organe d'actionnement (64) et/ou du renvoi d'un rayonnement par l'organe d'actionnement, une information représentative d'une variation de la position de l'organe d'actionnement par rapport à la matrice de capteurs (60).

3. Appareil selon la revendication 2, dans lequel le dispositif (30 ; 65 ; 67) est adapté à déduire, des variations d'ombre et/ou des variations du rayonnement renvoyé, une information représentative d'une variation de la position de l'organe d'actionnement parallèlement à la matrice de capteurs (60).

4. Appareil selon l'une quelconque des revendications 1 à 3, dans lequel le dispositif (30 ; 65 ; 67) est adapté à détecter des variations du niveau d'intensité lumineuse reçu par les capteurs (60).

5. Appareil selon l'une quelconque des revendications 1 à 4, dans lequel une couche translucide (62) de protection recouvre la matrice de capteurs (60).

6. Appareil selon l'une quelconque des revendications 1 à 5, dans lequel la surface de la matrice de capteurs (60) est supérieure à la surface de l'organe d'actionnement (64) en regard de ladite matrice.

7. Appareil selon l'une quelconque des revendications 1 à 6, dans lequel les capteurs de photons (60) sont réalisés en des matériaux transparents.

8. Appareil selon l'une quelconque des revendications 1 à 7, dans lequel le dispositif (30 ; 65 ; 67) comprend, en outre, des émetteurs (66, 68) d'ondes électromagnétiques.

9. Appareil selon l'une quelconque des revendications 1 à 8, dans lequel le dispositif (30 ; 65 ; 67) comprend, en outre, un guide d'onde (62) recouvrant la matrice de capteurs de photons (60) et des émetteurs (68) d'un rayonnement visible ou infrarouge à la périphérie du guide d'onde.

10. Appareil selon l'une quelconque des revendications 1 à 9, dans lequel l'appareil (10) est un téléphone cellulaire, un téléphone sans fil, un téléphone-ordinateur, un lecteur audio, un lecteur vidéo, un mini-ordinateur portable, un lecteur électronique, une tablette électronique, une caméra, une commande à distance, un dispositif d'analyse ou un capteur.

## Patentansprüche

1. Tragbares System (10), das Folgendes aufweist:
ein Gehäuse (12) mit einer ersten Oberfläche (14) und einer zweiten Oberfläche (16), die sich von der ersten Oberfläche unterscheidet und entgegengesetzt zur ersten Oberfläche ist;
einen Anzeigebildschirm (18) an der ersten Oberfläche (14);
eine Benutzerschnittstellenvorrichtung (30; 65; 67) an der zweiten Oberfläche (16), die eine Anordnung von Photonensensoren (60) aufweist, die in Reihen und Spalten angeordnet sind,
eine Steuereinheit (40), die mit dem Anzeigebildschirm (18) und der Benutzerschnittstellenvorrichtung (30; 65; 67) verbunden ist, und die in der Lage ist, eine Modifikation der Anzeige auf dem Anzeigebildschirm zu steuern, wenn die Benutzerschnittstellenvorrichtung ein Betätigungselement (64) in einem Bereich von Positionen relativ zur Sensoranordnung (60) detektiert,
**dadurch gekennzeichnet, dass** die Benutzerschnittstellenvorrichtung (30; 65; 67) ferner eine Anordnung von Emittern für sichtbare oder Infrarotstrahlung aufweist,
dass es ferner einen Dunkelheitssensor aufweist, wobei die Benutzerschnittstellenvorrichtung in der Lage ist, in einem ersten Modus Informationen, die für eine Variation des Abstands zwischen dem Betätigungselement und der Anordnung von Photonensensoren (60) repräsentativ sind, aus Variationen des Schattens des Betätigungselements (64) abzuleiten und in einem zweiten Modus aus der Variation der Reflexion einer Strahlung durch das Betätigungselement, wobei die Benutzerschnittstellenvorrichtung automatisch zwischen dem ersten Modus und dem zweiten Modus umschaltet, und zwar in Abhängigkeit einer vom Dunkelheitssensor erfassten Umgebungshelligkeit, und
dass die Photonensensoren (60) organische Sensoren sind, die durch Abscheidung von organischen Halbleitern und Leitermaterialien in flüssiger Form auf einem dielektrischen Träger gebildet sind.

2. System nach Anspruch 1, wobei die Vorrichtung (30; 65; 67) in der Lage ist, aus den Variationen des Schattens durch das Betätigungselement (64) und/oder der Reflexion einer Strahlung durch das Betätigungselement, Information, die für eine Variation der Position des Betätigungselement bezüglich der Sensoranordnung (60) repräsentativ ist, abzuleiten.

3. System nach Anspruch 2, wobei die Vorrichtung (30; 65; 67) in der Lage ist, aus den Schattenvariationen und/oder aus den Variationen der reflektierten Strahlung, Informationen, die für eine Variation der Position des Betätigungselements parallel zur Sensoranordnung (60) repräsentativ ist, abzuleiten.

4. System nach einem der Ansprüche 1 bis 3, wobei die Vorrichtung (30; 65; 67) in der Lage ist, Variationen der von den Sensoren (60) empfangenen Lichtintensität zu detektieren.

5. System nach einem der Ansprüche 1 bis 4, wobei eine lichtdurchlässige Schutzschicht (62) die Sensoranordnung (60) abdeckt.

6. System nach einem der Ansprüche 1 bis 5, wobei die Oberfläche der Sensoranordnung (60) größer ist als die Oberfläche des der Anordnung gegenüberliegenden Betätigungselements (64).

7. System nach einem der Ansprüche 1 bis 6, wobei die Photonensensoren (60) aus transparenten Materialien hergestellt sind.

8. System nach einem der Ansprüche 1 bis 7, wobei die Vorrichtung (30; 65; 67) ferner Emitter (66, 68) für elektromagnetische Wellen aufweist.

9. System nach einem der Ansprüche 1 bis 8, wobei die Vorrichtung (30; 65; 67) ferner einen Wellenleiter (62) aufweist, der die Anordnung aus Photonensensoren (60) und Emittern (68) für sichtbare oder infrarote Strahlung am Umfang des Hohlleiters abdeckt.

10. System nach einem der Ansprüche 1 bis 9, wobei das System (10) ein Mobiltelefon, ein drahtlos Telefon, ein Computertelefon, ein Audioplayer, ein Videoplayer, ein tragbarer Kleincomputer, ein elektronisches Lesegerät, ein Tablet, eine Kamera, eine Fernbedienung, eine Analysevorrichtung oder ein Sensor ist.

## Claims

1. A portable system (10) comprising:
a package (12) comprising a first surface (14) and a second surface (16) different from the first surface and opposite to the first surface;
a display screen (18) on the first surface (14);
a user interface device (30; 65; 67) on the second surface (16), the device comprising an array of photon sensors (60) distributed in rows and columns,
a control unit (40) connected to the display screen (18) and to the user interface device (30; 65; 67) and capable of controlling a modification of the display on the display screen when the user interface device detects the actuating member (64) in a range of positions relative to the sensor array (60),
**characterized in that** the user interface device (30; 65; 67) further comprises an array of emitters of a visible or infrared radiation,
**in that** it further comprises a darkness sensor, the user interface device being capable of deducing information representative of a variation of the distance between the actuating member and the array of photon sensors (60), in a first mode, from variations of the shadow of the actuating member (64), and, in a second mode, from the variation of the reflection of a radiation by the actuating member, the user interface device automatically switching between the first mode and the second mode depending on an ambient luminosity detected by the darkness sensor, and
**in that** the photon sensors (60) are organic sensors formed by deposition of organic semiconductor and conductor materials in liquid form on a dielectric support.

2. The system of claim 1, wherein the device (30; 65; 67) is capable of deducing from the variations of the shadow of the actuating member (64) and/or of the reflection of a radiation by the actuating member information representative of a variation of the position of the actuating member relative to the sensor array (60).

3. The system of claim 2, wherein the device (30; 65; 67) is capable of deducing from the shadow variations and/or from the variations of the reflected radiation information representative of a variation of the position of the actuating member parallel to the sensor array (60).

4. The system of any of claims 1 to 3, wherein the device (30; 65; 67) is capable of detecting variations of the light intensity level received by the sensors (60).

5. The system of any of claims 1 to 4, wherein a translucent protection layer (62) covers the sensor array (60).

6. The system of any of claims 1 to 5, wherein the surface area of the sensor array (60) is larger than the surface area of the actuating member (64) opposite said array.

7. The system of any of claims 1 to 6, wherein the photon sensors (60) are made of transparent materials.

8. The system of any of claims 1 to 7, wherein the device (30; 65; 67) further comprises electromagnetic wave emitters (66, 68).

9. The system of any of claims 1 to 8, wherein the device (30; 65; 67) further comprises a waveguide (62) covering the array of photon sensors (60) and emitters (68) of a visible or infrared radiation at the periphery of the waveguide.

10. The system of any of claims 1 to 9, wherein the system (10) is a cell phone, a wireless phone, a computer phone, an audio player, a video player, a mini portable computer, an electronic reader, a tablet, a camera, a remote control, an analysis device, or a sensor.
